(19) **Europäisches Patentamt**

**European Patent Office**

**Office européen des brevets**

(11) **EP 1 734 699 A2**

(12) **EUROPEAN PATENT APPLICATION**

(43) Date of publication:
 **20.12.2006 Bulletin 2006/51**

(51) Int Cl.:
 *H04L 12/28* (2006.01)

(21) Application number: **06012269.4**

(22) Date of filing: **14.06.2006**

(84) Designated Contracting States:
 **AT BE BG CH CY CZ DE DK EE ES FI FR GB GR HU IE IS IT LI LT LU LV MC NL PL PT RO SE SI SK TR**
 Designated Extension States:
 **AL BA HR MK YU**

(30) Priority: **14.06.2005 KR 20050050987**

(71) Applicants:
 • **Samsung Electronics Co., Ltd.**
  **Suwon-si, Gyeonggi-Do (KR)**
 • **Seoul National University Industry Foundation**
  **Seoul (KR)**

(72) Inventors:
 • **Kim, Young-Soo**
  **Yeongtong-gu**
  **Suwon-si,**
  **Gyeonggi-do (KR)**

 • **Lee, Dong-Jun**
  **Yeongtong-gu**
  **Suwon-si,**
  **Gyeonggi-do (KR)**
 • **Suh, Jung-Hoon**
  **Yeongtong-gu**
  **Suwon-si,**
  **Gyeonggi-do (KR)**
 • **Jang, Kyung-Hun**
  **Yeongtong-gu**
  **Suwon-si,**
  **Gyeonggi-do (KR)**
 • **Choi, Sung-Hyun**
  **School of Electrical Engineering**
  **Gwanak-gu,**
  **Seoul (KR)**

(74) Representative: **Grünecker, Kinkeldey, Stockmair & Schwanhäusser Anwaltssozietät Maximilianstrasse 58 80538 München (DE)**

(54) **Power saving method of portable communication device**

(57) A power saving method of a terminal in a wireless communication system including an access point for transmitting a beacon frame and a paging frame, and a terminal for compensating for timing offset with the access point using the beacon frame and detecting a position thereof using the paging frame. The terminal supports an active mode in which data transmission/reception is actually performed and a power saving mode in which power consumption is reduced when there is no transmission/reception data. The method includes calculating a paging timing offset generated for a reception interval of the paging frame using the beacon frame, and receiving the paging frame after a lapse of a time corresponding to the paging timing offset in the power saving mode.

FIG.3

**Description**

**BACKGROUND OF THE INVENTION**

1. Field of the Invention

The present invention relates generally to wireless communication, and in particular, to a power saving method of a portable communication device.

2. Description of the Related Art

The Institute of Electrical and Electronics Engineers (IEEE) 802.11 standard-based wireless local area networks (WLAN) for supporting mobile Internet service, which have recently been commercialized, are now being installed in public places.

In wireless communications, it would be preferable to power-off a terminal when the terminal is in an idle state in order to minimize power consumption thereof. However, because the terminal cannot receive packets in the power-off state, there is a need for a mechanism for minimizing power consumption in the idle state.

A WLAN system uses a power saving mode as a mechanism for minimizing power consumption. In the WLAN system, because a terminal in the power saving mode sis aware when signals will be received, all terminals are synchronized so that they may wake up simultaneously.

In an active mode a terminal transmits/receives packets n the power saving mode a terminal periodically wakes up only to determine whether there is any transmission from an access point (AP), and informs the AP of mode switching each time the terminal switches its operation mode. The AP transmits a beacon frame every beacon interval. The terminal in the power saving mode monitors the beacon frame. The beacon frame includes a Traffic Indication Map (TIM) including identifiers (IDs) of terminals having transmission packets in a buffer of the AP. Upon receiving a beacon frame including its own ID, the terminal in the power saving mode should stay awake for the remaining beacon interval.

In order to provide Voice over Internet Protocol (VoIP) service, WLAN necessarily requires a paging function. Because a paging interval is longer than the beacon interval, it is necessary to take into account a relationship between paging and power control when the terminal operates in a standby mode.

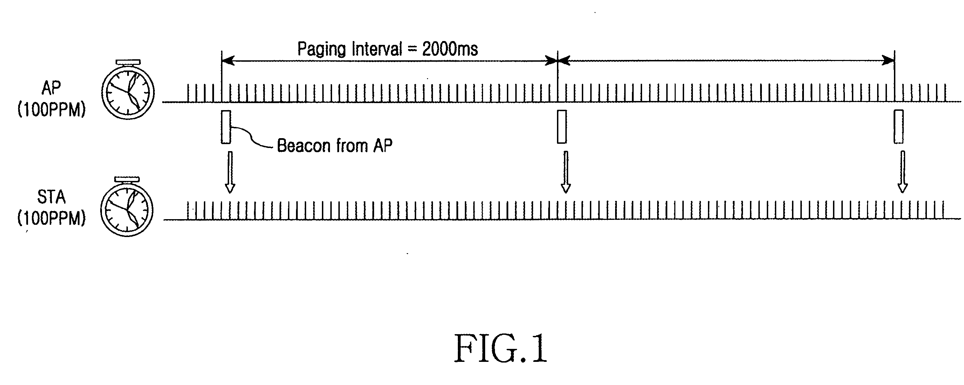

FIG. 1 illustrates the relationship between a beacon frame and a paging frame. When clock accuracy of the system is +/-100 parts per million (PPM), a timing offset is provided between a terminal and an AP. Generally, a length of a beacon frame for a WLAN is 100ms, and there is a $20\mu$s timing offset per beacon frame. Therefore, the terminal should be synchronized with the AP every time it receives a beacon frame. If a length of the paging frame is 2000ms, then the maximum timing offset is $400\mu$s.

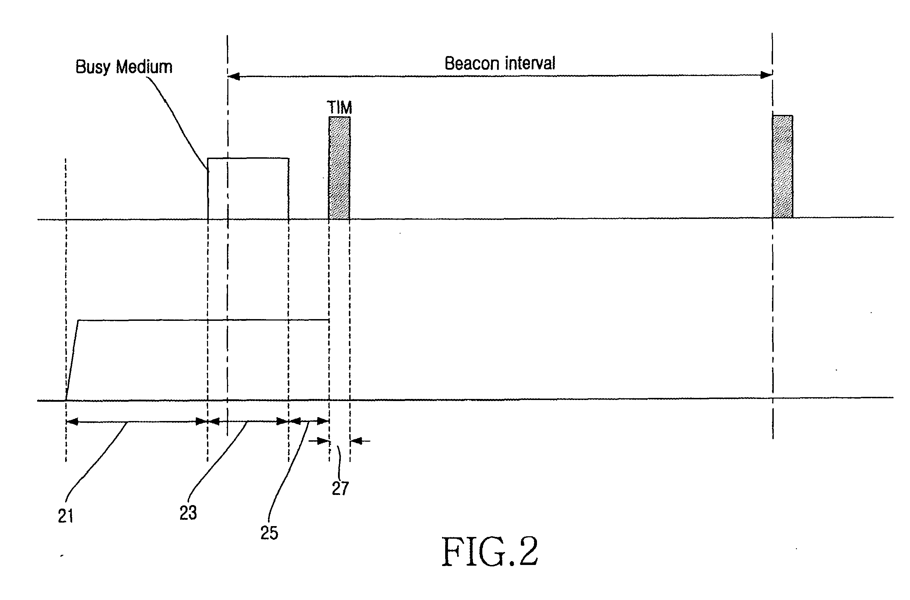

FIG. 2 shows the timing relationships when a terminal is awake to receive a paging frame in a WLAN.

In FIG. 2, the time $T_{beacon}$, for which the terminal should be awake to receive a paging frame, includes a timing offset 21, an average beacon delay time 23, a Point Coordination Function (PCF)Interframe Space (PIFS) 25, which is an interframe space for supporting a service which is susceptible to a time delay in PCF as defined in the 802.11 standard, and a beacon transmission time 27. The time $T_{beacon}$ per paging frame is calculated by Equation (1) :

$$\begin{aligned} T_{beacon} &= \text{timing offset} + \text{average beacon delay time} + \text{PIFS} + \text{transmission delay} \\ &= 400\mu s + 1599\mu s \ (2304B \ at \ 6Mbps/2) + 25\mu s + 52\mu s \ (64B \ at \ 24bps) \\ &= 2076\mu s \end{aligned}$$

$$\cdots\cdots\cdots (1)$$

A terminal, when receiving a paging frame, wakes up early by an offset length and prepares for reception to compensate for a timing offset,causing an increase in power consumption.

As shown in FIG. 2, in order to receive a paging frame in the power saving mode of the WLAN system, the terminal should previously wake up, thus causing an increase in power consumption.

**SUMMARY OF THE INVENTION**

It is, therefore, an object of the present invention to provide a power saving method capable of minimizing power consumption by minimizing the time for which a terminal is awake in a power saving mode.

According to one aspect of the present invention, there is provided a power saving method of a portable communication device. The method calculates a timing offset generated for a reception interval of a paging frame using beacon frames periodically transmitted from an access point, and receives the paging frame after a lapse of a time corresponding to the paging timing offset in a power saving mode. The paging timing offset is calculated by calculating a beacon timing offset using a beacon frame received within a predetermined time window, finding an average value of beacon timing offsets, and multiplying the average value of the beacon timing offsets by the number of beacon frames corresponding to the paging frames.

According to another aspect of the present invention, there is provided a method for determining a paging reception time in a wireless communication terminal supporting an active mode where maximum output is secured in a communication state, and a power saving mode where power consumption is minimized in an idle state. The method includes calculating a timing offset by receiving at least one beacon signal periodically transmitted from a transmitter, and determining a reception time of a paging signal using the timing offset.

Preferably, the timing offset is calculated by finding an average of timing offsets for beacon signals received within a predetermined time window, and multiplying the timing offset average by the number of beacon signals corresponding to a length of the paging signal.

Preferably, the paging reception time represents a time at which the terminal wakes up from the power saving mode to receive the paging signal.

## BRIEF DESCRIPTION OF THE DRAWINGS

The above and other objects, features and advantages of the present invention will become more apparent from the following detailed description when taken in conjunction with the accompanying drawings in which:

FIG. 1 illustrates a relationship between a beacon frame and a paging frame;
FIG. 2 shows the time for which a terminal is awake to receive a paging frame in a WLAN; and;
FIG. 3 describes of a power saving method of a portable communication device according to the present invention.

## DETAILED DESCRIPTION OF EXEMPLARY EMBODIMENTS

With reference to accompanying drawings, a detailed description will now be made of a power saving method of a portable communication device according to the present invention.
In the power saving method according to the present invention, a terminal reduces power waste caused by premature mode switching by previously calculating a timing offset for paging frame reception in à power saving mode using a timing offset calculated from a beacon frame periodically transmitted by an AP to switch its operation mode to an active mode at the proper time.

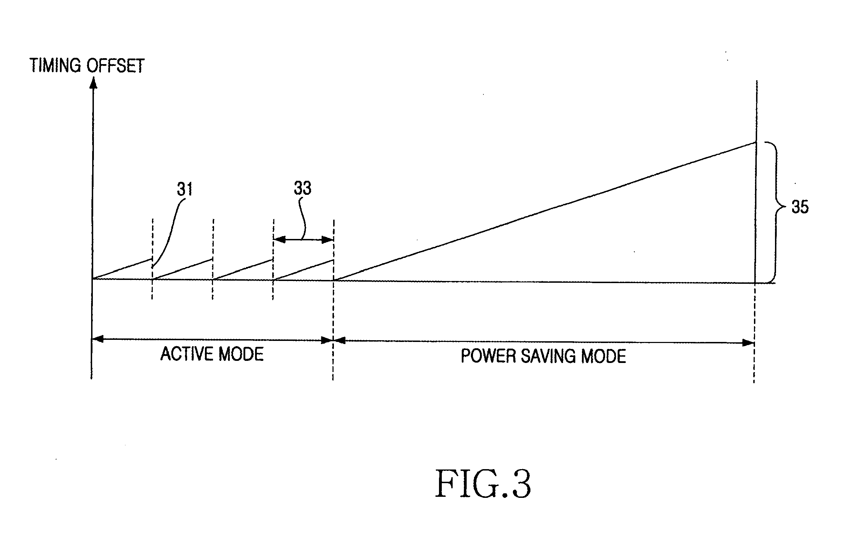

As shown in FIG. 3, a power mode of a terminal for a WLAN system is divided into an active mode and a power saving mode. In the active mode, a terminal receives all frames transmitted from an AP and, if there is any frame to transmit, the terminal transmits the frame according to a Carrier Sense Multiple Access/Carrier Sense (CSMA/CS) rule. In the power saving mode, the terminal informs the AP of its power mode, and receives only the beacon frame for the remaining time to minimize power consumption.

In the active mode, the terminal calculates a timing offset 31 by receiving a beacon frame periodically transmitted by the AP, and compensates for the calculated timing offset 31 to synchronize with the AP. In addition, the terminal sets a predetermined time window (not shown) and finds an average value of the timing offsets calculated from the beacon frames received within the time window.

If a length 33 of a beacon frame is denoted by 'b' and an average value of timing offsets calculated from beacon frames is denoted by 'a', a length 'X' of a paging frame is equal to the product of the number 'n' of beacon frames corresponding to the paging frame and a length 'b' of the beacon frames (X=b*n).
Therefore, a timing offset 35 for a paging frame reception time can be calculated by Equation (2):

$$\text{timing offset} = a * n). \qquad\qquad .....2$$

where 'a' is an average timing offset for beacon frames, and 'n' is the number of the beacon frames corresponding to a length of the paging frame.

In this manner, the terminal estimates an expected timing offset while it receives a paging frame using an average value of timing offsets calculated from beacon frames received in the active mode, and wakes up at the right time taking the estimated timing offset into account to receive the corresponding paging frame.

A comparison between performance simulation of a WLAN portable communication device to which the proposed power saving method is applied and a WLAN portable communication device to which the proposed power saving method is not applied is described below in terms of the standby time of the portable communication device.

Table 1 shows a chip set specification of a WLAN portable communication device for performance simulation.

Table 1

| Chip Set Power Consumption | |
|---|---|
| Active Mode (Tx) | 760mW (typ) @ 15dBm |
| Active Mode (Rx) | 525mW (typ) |
| Standby Mode | 3mW (typ) |
| Sleep Mode (Power Saving Mode) | 0.3mW (typ) |

Baseline power consumption of a portable communication device is calculated separately in the active mode where data is received and the power saving mode where the power consumption is kept at a minimum by Equations (3) and (4), respectively:

$$\text{power consumption in active mode} = \text{baseline power consumption} + \text{reception power} \quad \dots\dots(3)$$
$$= 1W + 525mW$$
$$= 1525mW$$

$$\text{Power consumption in power saving mode} = \text{baseline power consumption} + \text{saved power} \quad \dots(4)$$
$$= 10mW + 0.3mW$$
$$= 10.3mW$$

Herein, the baseline power consumption refers to the basically consumed power except for the power consumed during transmission and reception of the portable communication device in the WLAN.

A standby time calculated before and after the proposed power saving method is applied to the portable communication device equipped with a 1Ah (3.7V) battery by Equations (5) and (6), respectively:

- Before application of the power saving method

$$311.65H = \left( (3.7V \times 1Ah \times 3600s) / \frac{((1225mW \times 2076us) + (10mW \times (2s - 2076us)))}{2s} \right) / 3600s \quad \dots\dots(5)$$

and

- After application of the power saving method

$$319.81H = \left( \left( 3.7V \times 1Ah \times 3600s \right) / \frac{\left( (1225mW \times 1676us) + (10mW \times (2s - 1676us)) \right)}{2s} \right) / 3600s$$

$$\ldots\ldots(6)$$

Where H denotes the time unit Hour.

The foregoing result demonstrates that the present invention with the novelpower saving method increases the standby time of the portable communication device by 8.16H.

Table 2 shows a comparison between the conventional portable communication device and the novel portable communication device according to a change in an active mode's baseline power consumption and a power saving mode's baseline power consumption.

Table 2

| Baseline Power Consumption in Active Mode | Baseline Power Consumption in Power Saving Mode | Standby Time (Conventional Device) | Standby Time (Novel Device) | Gain |
|---|---|---|---|---|
| 1W | 10mW | 311.65H | 319.81H | 8.16H |
| | 20mW | 169.24H | 171.61H | 2.37H |
| | 50mW | 71.39H | 71.79H | 0.4H |
| | 100mW | 36.35H | 36.46H | 0.11H |
| 500mW | 10mW | 325.9H | 331.83H | 5.93H |
| | 20mW | 173.36H | 175.01H | 1.65H |
| | 50mW | 72.11H | 72.38H | 0.27H |
| | 100mW | 36.54H | 36.61H | 0.07H |

The comparison shows that in the same environment, a portable communication device to which the present invention with the novel power saving method is applied is superior to a portable communication device to which the proposed power saving method is not applied, in terms of the standby time. This advantage is especially significant when the baseline power consumption in the power saving mode is low.

[0032]   , The power saving method according to the present invention allows a terminal in the power saving mode to previously estimate an average timing offset value for beaconframes periodically received in the active mode and wake up at the proper time using the estimated timing offset value to receive a paging frame, thereby reducing power consumption caused by premature wakeup.

In addition, the power saving method according to the present invention allows a terminal in the power saving mode to update power saving efficiency by receiving the paging frame at the proper time, thereby maximally extending the standby time of a terminal.

While the invention has been shown and described with reference to a certain preferred embodiment thereof, it will be understood by those skilled in the art that various changes in form and details may be made therein without departing from the spirit and scope of the invention as defined by the appended claims.

## Claims

1.   A power saving method of a terminal supporting an active mode in which data transmission/reception is actually performed and a power saving mode in which power consumption is reduced when there is no transmission/reception data, in a wireless communication system including an access point for transmitting beacon frames and paging frames, and a terminal for compensating for timing offsets with the access point using beacon frames and detecting a position thereof using the paging frames, the method comprising:

     calculating a paging timing offset generated for a reception interval of the paging frame using a beacon frame of the beacon frames; and

receiving a paging frame of the paging frames after a lapse of a time corresponding to a paging timing offset in the power saving mode.

2. The power saving method of claim 1, wherein the step of calculating a paging timing offset comprises:

calculating a beacon timing offset using a beacon frame received within a predetermined time window;
finding an average value of the beacon timing offsets; and
multiplying the average value of the beacon timing offsets by the number of beacon frames corresponding to the paging frames.

3. A method for determining a paging reception time in a wireless communication terminal supporting an active mode in which maximum output is secured in a communication state and a power saving mode in which power consumption is minimized in an idle state, the method comprising:

calculating a timing offset by receiving at least one beacon signal periodically transmitted from a transmitter; and
determining a reception time of a paging signal using the timing offset.

4. The method of claim 3, wherein the step of calculating the timing offset comprises:

finding an average of timing offsets for beacon signals received within a predetermined time window; and
calculating a paging timing offset by multiplying the average timing offset by the number of beacon signals corresponding to a length of the paging signal.

5. The method of claim 4, wherein the average timing offset is determined using beacon signals received at the terminal in the active mode.

6. The method of claim 4, wherein the reception time of a paging signal represents a time at which the terminal wakes up from the power saving mode to receive the paging signal.

FIG.1

Beacon interval

TIM

Busy Medium

27

25

23

21

FIG.2

FIG.3